# EUROPÄISCHE PATENTSCHRIFT

(11) **EP 2 220 565 B1**
(45) Veröffentlichungstag und Bekanntmachung des Hinweises auf die Patenterteilung: **03.04.2013**
(21) Anmeldenummer: 08861416.9
(22) Anmeldetag: 10.12.2008
(51) Int. Cl.: G06F 13/40, H04B 3/54

(54) **VERFAHREN ZUM ÜBERMITTELN VON DATEN INNERHALB EINES BUSSYSTEMS SOWIE BUSSYSTEM**
METHOD FOR TRANSMITTING DATA WITHIN A BUS SYSTEM AND BUS SYSTEM
PROCÉDÉ DE TRANSMISSION DE DONNÉES DANS UN SYSTÈME DE BUS, ET SYSTÈME DE BUS CORRESPONDANT

(30) Priorität: 14.12.2007 DE 102007060441
(43) Veröffentlichungstag der Anmeldung: 25.08.2010
(73) Patentinhaber: Insta Elektro GmbH, 58509 Lüdenscheid (DE)
(72) Erfinder: GROSSEN, Thomas, 58239 Schwerte (DE); GROSCH, Volker, 45549 Sprockhövel (DE)
(86) Internationale Anmeldenummer: PCT/EP2008/067199
(87) Internationale Veröffentlichungsnummer: WO 2009/077403

(56) Entgegenhaltungen:
- WO-A-03/036877
- DE-A1- 10 352 286
- DE-A1-102004 026 468
- US-A- 6 111 918
- US-A1- 2004 263 321

## Beschreibung

Die Erfindung betrifft ein Verfahren zum Übermitteln von Daten innerhalb eines Bussystems, umfassend ein Steuermodul, einen Bus und an den Bus angeschlossene und von dem Steuermodul ansteuerbare Busteilnehmer, von einem Busteilnehmer an das Steuermodul, wobei die Busteilnehmer von dem Steuermodul zum Übermitteln von bestimmten Daten individuell angesteuert werden. Ferner betrifft die Erfindung ein Bussystem zum Durchführen dieses Verfahrens mit den Merkmalen des Oberbegriffs des Anspruchs 10.

Bussysteme werden bei elektrischen/elektronischen Installationen zur Steuerung bestimmter Einrichtungen bei unterschiedlichsten Anwendungen eingesetzt. Ein Vorteil des Einsatzes von Bussystemen ist auch die Verringerung eines Verkabelungsaufwandes, was von besonderem Vorteil bei Gebäudeinstallationen oder Lichtsteuersystemen ist. Ein solches Bussystem umfasst ein Steuermodul, einen von dem Steuermodul ausgehenden Bus, der typischerweise zwei- oder dreiadrig ausgebildet ist und mehrere an dem Bus angeschlossene Busteilnehmer. Bei einer dreiadrigen Ausbildung des Busses dient eine Leitung der Spannungsversorgung, eine weitere Leitung als Masseleitung und die dritte Leitung als Datenleitung. In Abhängigkeit von dem Busbetriebssystem und der Konzeption der entsprechenden Schnittstellen ist die Datenleitung unidirektional oder bidirektional ausgebildet. Die Ausbildung einer unidirektionalen Schnittstelle ist günstiger in der Realisierung als die Ausbildung von bidirektionalen Schnittstellen für einen Voll- oder Halbduplexbetrieb. Bei bidirektionalen Bussystemen ist gegenüber unidirektionalen Bussystemen von Vorteil, dass die einzelnen Busteilnehmer von dem Steuermodul nicht nur angesteuert werden können, sondern dass auch Daten von jedem einzelnen Busteilnehmer an das Steuermodul übermittelt werden können. Bei derartigen Daten kann es sich beispielsweise um eine Kennung, etwa die Seriennummer eines Busteilnehmers handeln, anhand der ein Busteilnehmer identifiziert und auch bezüglich seiner Art steuermodulseitig erkannt und gegebenenfalls zugeordnet werden kann.

Ein in der Praxis bewährtes Bussystem ist in der DE 103 52 286 B1 beschrieben. Bei diesem Bussystem handelt es sich um ein unidirektional ausgelegtes Bussystem, bei dem die einzelnen Busteilnehmer in die diesem Datenleitung eingeschaltet sind. Bei Bussystem wird ein von dem Steuermodul ausgehendes Datenpaket von jedem in der Reihe seiner physikalischen Anordnung angeordneten Busteilnehmer empfangen und nach einer Änderung des Datenpaketes an den nachfolgenden Busteilnehmer gesendet. Auf diese Weise können mit einem geringen Verkabelungsaufwand die einzelnen Busteilnehmer hinsichtlich ihrer physikalischen Anordnung in dem Bus von dem Steuermodul angesprochen werden. Da dieses Bussystem unidirektional ausgelegt ist, bedarf es eines gewissen Programmieraufwandes, um die einzelnen Busteilnehmer im Steuermodul zu definieren.

US 6,111,918 A1 beschreibt ein eingangs genanntes, gattungsgemäßes Verfahren. Jeder Busteilnehmer dieses vorbekannten Bussystems verfügt neben seiner Last über einen Sendeschalter. Der Sendeschalter ist als Transistor ausgeführt und dient dem Zweck, bei entsprechender Ansteuerung Daten von dem Busteilnehmer an das Steuermodul zu übermitteln, wobei die Taktung des Öffnens und Schließens des Schalters das Datenprotokoll darstellt.

Gemäß US 2004/0263321 A1 umfasst ein System zur bidirektionalen Daten- und Leistungsübertragung einen Stromempfänger und einen Treiber sowie eine Mehrzahl von Netzknoten, die über eine Mehrzahl von Drähten an den Stromempfänger angeschlossen sind, um eine Stromversorgung und eine bidirektionale Übertragung von Daten zwischen dem Stromempfänger und den Netzknoten zu ermöglichen. Die Netzknoten umfassen einen Mikroprozessor, eine Last, die entweder ein Sensor oder ein Aktuator sein kann, und eine aktive Stromsenke. Zur Datenübertragung wird die aktive Stromsenke angesteuert, wobei eine Veränderung des Stromflusses in einer Versorgungsleitung durch den Stromempfänger detektiert wird.

Ausgehend von diesem Stand der Technik liegt der Erfindung die Aufgabe zugrunde, mit möglichst einfachen Mitteln eine Datenübertragung von einem an ein Bussystem angeschlossenen Busteilnehmer an das Steuermodul vorzuschlagen.

Gelöst wird diese Aufgabe erfindungsgemäß durch ein Verfahren mit den Merkmalen des Anspruchs 1.

Bei diesem Verfahren wird die Last eines Busteilnehmers durch Herbeiführen von Zustandsänderungen moduliert, um die zu übermittelnden Daten zu generieren. Handelt es sich bei der Last eines Busteilnehmers beispielsweise um ein LED-Leuchtmittel, kann der Wechsel zwischen einem Betrieb und einem Nichtbetrieb des Leuchtmittels als Modulation der zu übermittelnden Daten genutzt werden. Bei diesem Verfahren ist lediglich eine unidirektionale Datenleitung sowie ein Protokoll notwendig, damit die Busteilnehmer individuell angesteuert werden zu können. Bei einer entsprechenden Ansteuerung eines Busteilnehmers werden dann entsprechend einem vorgegebenen Protokoll die zu übermittelnden Daten durch entsprechende Zustandsänderungen der Last gesendet. Das Sendeprotokoll - also die von der jeweiligen Last des Busteilnehmers ausgeführte Aktion - wird erfasst und hinsichtlich des darin enthaltenen Datenprotokolls ausgewertet. Somit kann eine Datenübermittlung von einem Busteilnehmer über entsprechende Zustandsänderungen seiner Last ohne zusätzlichen Aufwand hinsichtlich der Verkabelung und/oder der Konzeption der Schnittstellen erfolgen. Im Falle eines LED-Leuchtmittels als Last eines Busteilnehmers kann das Erfassen eines Datenprotokolls beispielsweise optoelektronisch erfolgen und anschließend ausgewertet werden. Die unterschiedlichen Zustände, zwischen denen die Last eines solchen Busteilnehmers toggelt (wechselt), lassen sich in einem solchen Fall anhand der Helligkeitsunterschiede erfassen und anschließend auswerten. Ein Erfassen der Sendetätigkeit eines Busteilnehmers ist auch über die Stromaufnahme der Last des Busteilnehmers während der Abarbeitung des Sendeprotokolls möglich. Eine solche Vorgehensweise bietet sich an, wenn die Busteilnehmer mit ihrer Last hinsichtlich ihrer Versorgungsspannung an das Steuermodul angeschlossen sind. Steuermodulseitig kann dann mit einer Strommesseinrichtung die sich über die Zeit ändernde, getaktete Stromaufnahme des jeweils von dem Steuermodul angesprochenen Busteilnehmers erfasst werden, in welchem Stromaufnahmeprotokoll das von dem Busteilnehmer abgearbeitete Datenprotokoll enthalten ist.

Es bietet sich an, dass der individuell von dem Steuermodul angesprochene Busteilnehmer bzw. dessen Last zum Senden der gewünschten Daten zwischen zwei Zuständen toggelt. Je nachdem, in welche Lastzustände der Busteilnehmer geschaltet werden kann, handelt es sich bei diesen Zuständen um die Betriebszustände "Volllast" und "Teillast" oder "Volllast" und keine "Last" oder "Teillast" und "keine Last", wobei der größte Signalkontrast zwischen den Zuständen "Volllast" und "keine Last" gegeben ist. Handelt es sich bei der Last des Busteilnehmers beispielsweise um ein LED-Leuchtmittel, kann die Modulation in einer Frequenz erfolgen, dass das Senden des Datenprotokolls nicht oder nur kaum erkennbar durchgeführt wird.

Damit jeder Busteilnehmer beispielsweise seine Kennung oder seine Parametrierung im Rahmen eines solchen Protokolls senden kann, wird der ohnehin jedem Busteilnehmer zugeordnete Mikroprozessor entsprechend zum Abarbeiten eines solchen Protokolls programmiert. Die zu modulierenden Daten, etwa die Kennung des Busteilnehmers können auf einem nichtflüchtigen Speicher des Busteilnehmers hinterlegt sein. Ebenfalls besteht die Möglichkeit, entweder zusätzlich zu in einem Speicher hinterlegten Daten oder auch anstelle dieser die Stellung einzelner Codierpins des Mikroprozessors zu nutzen, damit bei einer entsprechenden Ansteuerung durch das Steuermodul das eine oder das andere Datenprotokoll abgearbeitet wird, und zwar durch entsprechend getaktete Ansteuerung der Last, beispielsweise des LED-Leuchtmittels.

Erfolgt das Erfassen des von dem Busteilnehmer abgearbeiteten Datenprotokolls durch Messen der Stromaufnahme des Busteilnehmers beim Abarbeiten des Datenprotokolls, kann, für den Fall, dass der eigentliche Aktor - die Last - nicht von der Versorgungsspannung des Busses gespeist wird, ein Widerstand als Verbraucher zwischen der Versorgungsleitung und der Masse eingeschaltet werden. Auch das Vorsehen eines solchen Widerstandes zum Erzeugen eines Stromverbrauches im Busteilnehmer und das Wechseln des Schaltens des Widerstandes auf Masse ist im Rahmen dieser Ausführung bezogen auf den jeweiligen Busteilnehmer als zwischen zwei Zuständen wechselnde Last anzusehen. Eine solche Schaltungsanordnung wird man bei Sensoren, die an dem Bus angeschlossen sind, einsetzen, da diese oftmals keine anderweitigen Verbraucher aufweisen.

Bei einer Strommessung zum Erfassen der sich über die Zeit ändernden Stromaufnahme bei der Abarbeitung eines Datenprotokolls durch einen Busteilnehmer erfolgt dieses vorzugsweise durch eine entsprechende, dem Steuermodul zugeordnete Strommesseinrichtung. Als Strom messender Sensor kann beispielsweise einem Shunt-Widerstand dienen. Dieser ist vorzugsweise an einem Signalverstärker angeschlossen. Das verstärkte Signal wird frequenzgefiltert, um das Datensignal von anderen erfassten Rauschsignalen herauszufiltern. Typischerweise wird man einem Frequenzfilter einen Komparator nachschalten, beispielsweise einen Schmitt-Trigger, dessen Ausgangssignal wiederum einem Mikroprozessor zur Auswertung zugeleitet wird. Der Mikroprozessor wertet das erhaltene Signal auf von dem Busteilnehmer an den Mikroprozessor übermittelte Daten aus. Als Messglied kann auch ein magnetisch arbeitendes Messglied eingesetzt werden, beispielsweise ein Hallsensor.

Das beschriebene Verfahren kann nicht nur bei einer Inbetriebnahme eines Bussystems eingesetzt werden. Auch wenn einzelne Busteilnehmer neu an den Bus angeschlossen werden oder Busteilnehmer zu Reparaturzwecken von dem Bus abgenommen und anschließend wieder an diesen angeschlossen werden, kann auf diese Weise die gewünschte Busteilnehmerkennung gegebenenfalls erneut an das Steuermodul gesendet werden. Gleichfalls können Schaltzustände eines Busteilnehmers - seine Parametrierung - an das Steuermodul gesendet werden. Gerade bei Reparaturarbeiten von Busteilnehmern kann es vorkommen, dass dieser in seinem einen Parametersatz vom Bus abgenommen und mit einem anderen Parametersatz wieder an den Bus angeschlossen wird. Ohne entsprechende Korrektur der Parametrierung wird dieser Busteilnehmer bei seiner Ansteuerung nicht so arbeiten wie gewünscht. Über die vorhandene, zumindest unidirektionale Datenleitung können nach Erfassen des Parametersatzes eines solchen neu oder wieder an den Bus angeschlossenen Busteilnehmers dieser gegebenenfalls korrigiert bzw. geändert werden.

Bei den auf dieser Weise angesteuerten Aktoren eines Bussystems erfolgt gleichzeitig eine Kontrolle bezüglich ihrer Funktionstüchtigkeit. Dieses gilt insbesondere für solche Busteilnehmer, deren Aktoren (Lasten) unmittelbar aus der businternen Versorgungsspannung gespeist werden. Handelt es sich bei dem installierten Bussystem um einen Lichtsteuerbus, etwa zum Bereitstellen einer Fassadenbeleuchtung, kann im Zuge der Initialisierung des Bussystems, zu dem das Übermitteln von Daten eines jeden Busteilnehmers an das Steuermodul zählt, wobei jeder Busteilnehmer einzeln seine Kennung durch entsprechend angesteuerten Betrieb an das Steuermodul sendet, seine räumliche Anordnung erfasst werden. Somit erfolgt eine Übermittlung des Identifizierungsprotokolls des Busteilnehmers durch Beobachten der Aktionen der ihm zugeordneten Last. Bei Leuchtmitteln als Busteilnehmern wird deren Leuchtbetrieb erfasst, beispielsweise mit einer Kamera. Bei einer solchen Ausgestaltung des Verfahrens kann zusammen mit dem Erfassen des Sendeprotokolls eine Ortsauflösung hinsichtlich der Anordnung des Busteilnehmers durchgeführt werden. Eine solche Ortsauflösung bietet sich beispielsweise bei einem als Fassadenbeleuchtung eingesetzten Lichtsteuerbus an, wobei zur Ortsauflösung eine entsprechend positionierte Kamera verwendet wird, mit der die Lichtdaten erfasst und im Zuge einer nachgeschalteten Bildauswertung ausgewertet und auf diese Weise die Ortsauflösung vorgenommen wird. Die beschriebene Ortsauflösung durch Erfassen der Aktionen eines Busteilnehmers, insbesondere wenn es sich bei diesen um Leuchtmittel handelt, zur Ortsauflösung kann grundsätzlich auch unabhängig von dem beanspruchten Verfahren eingesetzt werden. Wird das beschriebene Ortsauflösungsverfahren unabhängig von dem beanspruchten Verfahren eingesetzt, kommt es lediglich auf die Erfassung einer Aktion des Busteilnehmers, also beispielsweise das Aufleuchten eines Leuchtmittels und das Erfassen desselben an, ohne dass mit der von dem Busteilnehmer ausgeführten Aktion ein eine bestimmte Information beinhaltendes Protokoll abgearbeitet und aufgenommen wird.

Das beschriebene Verfahren eignet sich insbesondere, wenn LED-Leuchtmittel als Last der Busteilnehmer an den Bus angeschlossen sind, da der Stromverbrauch derartiger Busteilnehmer sehr präzise und steilflankig gesteuert werden kann.

Das von den einzelnen Busteilnehmern abzuarbeitende Sendeprotokoll erfolgt gemäß einem Ausführungsbeispiel im Manchester-Code, da dieser Code das Taktsignal enthält. Die Flanken dieses Signals tragen, bezogen auf das Taktsignal, die Information, und zwar abhängig davon, ob eine Flanke fällt oder steigt. Ebenfalls eignet sich der so genannten Zweiphasenmarkierungscode (Biphase-Mark-Code), bei dem für jedes Datenbit zwei Zustände übertragen werden.

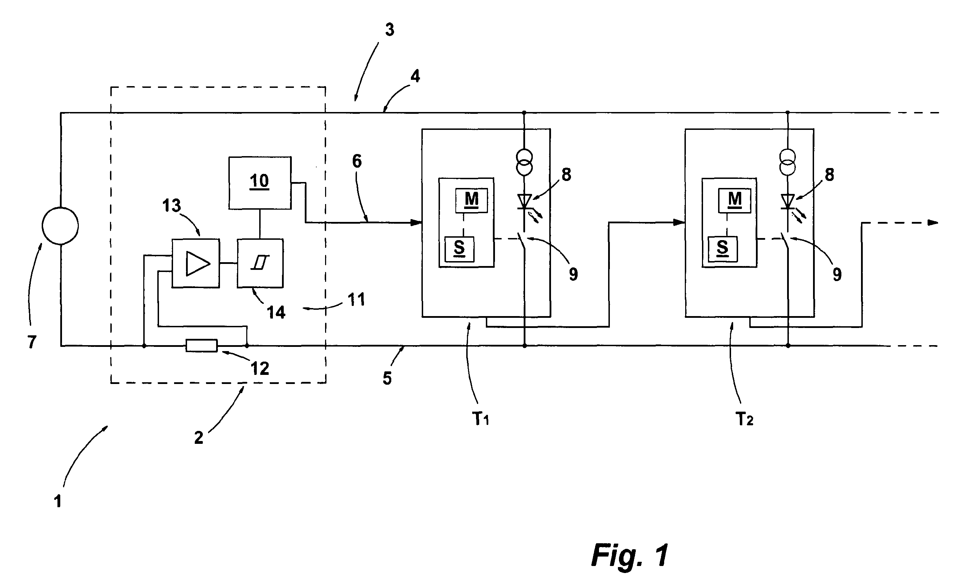

Nachfolgend ist die Erfindung anhand eines Ausführungsbeispiels unter Bezugnahme auf die beiliegende **Figur 1** beschrieben. Figur 1 zeigt nach Art eines schematisierten Blockschaltbildes ein Bussystem 1. Das Bussystem 1 verfügt über ein Steuermodul 2 und einen an das Steuermodul 2 angeschlossenen dreiadrigen Bus 3. Auf der Leitung 4 des Busses 3 liegt die Versorgungsspannung an. Diese beträgt typischerweise 10 Volt. Die Leitung 5 ist die Masseleitung. Die dritte Leitung des Busses 3 - die Leitung 6 - ist als Datenleitung konzipiert. Diese ist, wie durch die Pfeile in der Datenleitung 6 angedeutet, unidirektional ausgelegt und arbeitet bei dem dargestellten Ausführungsbeispiels nach dem in DE 103 52 286 A1 der Anmelderin beschriebenen System. Der Offenbarungsgehalt dieses Dokumentes wird durch diese Bezugnahme explizit ebenfalls zum Offenbarungsgehalt dieser Ausführungen gemacht. Das Steuermodul 2 ist seinerseits an eine Spannungsversorgung 7 angeschlossen.

Angeschlossen an den Bus 3 sind mehrere Busteilnehmer, wobei in der Figur nur zwei Busteilnehmer T₁, T₂ beispielhaft dargestellt sind. Die Busteilnehmer T₁, T₂ sind identisch aufgebaut. Diese enthalten als Last jeweils ein LED-Leuchtmittel. Jeder Busteilnehmer T₁, T₂ verfügt zudem über einen nicht flüchtigen Speicher S, in dem beispielsweise die Kennung und/oder die Parametrierung des Busteilnehmers T₁, T₂ oder weitere Daten abgelegt sind. Jeder Busteilnehmer T₁, T₂ verfügt über einen Mikrokontroller M. Sowohl der Speicherbaustein S als auch der Mikrokontroller M sind typischer Weise ohnehin Bestandteil des jeweiligen Busteilnehmers T₁, T₂. Da die Busteilnehmer T₁, T₂ über LED-Leuchtmittel als Last verfügen, umfassen diese jeweils zumindest eine LED 8. Die LED 8 ist an die Versorgungsleitung 4 und an die Masseleitung 5 angeschlossen und zwar unter Zwischenschaltung eines Schaltmittels 9. Bei diesem handelt es sich bei dem dargestellten Ausführungsbeispiel vorzugsweise jeweils um ein elektronisches Schaltmittel. Zum Einschalten der LED 8 wird entsprechend von dem Mikrokontroller M das Schaltmittel 9 angesteuert.

Die Busteilnehmer T₁, T₂ sind in die unidirektionale Datenleitung 6 eingeschaltet. Jeder Busteilnehmer T₁, T₂ kann über einen entsprechenden Algorithmus unabhängig von den anderen Busteilnehmern und damit individuell von dem Steuermodul 2 angesteuert werden.

Das Steuermodul 2 ist in Figur 1 lediglich mit seinen zum Beschreiben der Erfindung notwendigen Komponenten dargestellt. Das Steuermodul 2 verfügt über einen Mikroprozessor 10 sowie über eine Strommesseinrichtung 11. Die Strommesseinrichtung 11 dient zum Erfassen der Stromaufnahme der Busteilnehmer T₁, T₂. Als Messglied dient bei dem dargestellten Ausführungsbeispiel ein Shunt-Widerstand 12. Die Messsignale des Shunt-Widerstandes 12 beaufschlagen einen Signalverstärker 13. Teil des Signalverstärkers 13 ist ein Frequenzfilter. Das Ausgangssignal des Signalverstärkers bzw. des Frequenzfilters beaufschlagt ein Komparatorglied 14, dessen Ausgangssignal wiederum an einen Eingang des Mikroprozessors 10 angeschlossen ist.

Da es sich bei dem Bussystem 1 um ein unidirektional konzipiertes Bussystem handelt, können über die Datenleitung 6 von den einzelnen Busteilnehmer T₁, T₂ keine Daten an das Steuermodul 2 gesendet werden. Um dem Steuermodul 2 busteilnehmerbezogene Informationen bzw. Daten zukommen zu lassen, können die Busteilnehmer T₁, T₂ jeweils individuell durch das Steuermodul 2 zur Abarbeitung eines bestimmten Aktionsprotokolls angesteuert werden. Im Rahmen dieses Aktionsprotokolls werden die zu übertragenden Daten in Zustandsänderungen der Last - der LED 8 - moduliert. Die LED 8 des jeweiligen Busteilnehmers T₁, T₂ toggelt dann zwischen zumindest zwei Zuständen, beispielsweise einem Zustand "Last" und einem Zustand "keine Last". Durch die Zustandsänderung wird auf diese Weise ein binäres Datenprotokoll erzeugt.

Damit das Steuermodul 2 von jedem an den Bus 3 angeschlossenen Busteilnehmer T₁, T₂ die gewünschten Daten, beispielsweise die jeweilige Busteilnehmerkennung erhalten kann, werden in einem ersten Schritt sämtliche, an den Bus 3 angeschlossene Busteilnehmer T₁, T₂ ausgeschaltet. Dieses erfolgt vor dem Hintergrund, zur Reduzierung von das Datenprotokoll verfremdenden Signalen im Bus 3 keine stromverbrauchende Elemente angeschlossen zu haben. In einem nächsten Schritt wird jeder Busteilnehmer T₁, T₂, von dem Informationen bzw. Daten an das Steuermodul 2 übertragen werden sollen, individuell von dem Steuermodul 2 über die Datenleitung 6 angesteuert, das jeweils gewünschte Aktionsprotokoll (Datenprotokoll) abzuarbeiten. Wird beispielsweise gewünscht, dass ein Busteilnehmer T₁, T₂ seine Kennung an das Steuermodul 2 sendet, greift der Mikrokontroller M des Busteilnehmers T₁, T₂ auf die in dem Speicher S hinterlegte Kennung zurück. Die jeweiligen Daten werden durch Modulation der beiden vorgenannten Zustände der Last gesendet, wobei bei dem beschriebenen Ausführungsbeispiel die Daten in einem Manchester-Code gesendet werden. Gesendet wird der Code durch entsprechendes Öffnen und Schließen des Schaltmittels 9, so dass entsprechend dem Takt des Öffnen und Schließens des Schaltmittels 9 die LED 8 leuchtet oder nicht leuchtet. Die Frequenz kann hoch sein, damit das Datenprotokoll in kurzer Zeit abgearbeitet werden kann. Während des Prozesses des Sendens der Daten des einen Busteilnehmers, etwa des Busteilnehmers T₁ bleiben die weiteren, an den Bus 3 angeschlossenen Busteilnehmer T₂ inaktiv.

Das Datenprotokoll wird über die Strommesseinrichtung 11 steuermodulseitig anhand der sich ändernden Stromaufnahme bei der Abarbeitung des Datenprotokolls erfasst. Die Intervalle, in denen die LED 8 eingeschaltet ist, ist durch die Strommesseinrichtung 11 detektierbar. Somit kann über die Strommesseinrichtung 11 das von dem jeweiligen Busteilnehmer T₁, T₂ abgearbeitete Datenprotokoll (Sendeprotokoll) durch den Wechsel zwischen stromaufnehmenden Perioden und nicht-stromaufnehmenden Perioden erfasst werden. Eine Meldung oder Rückmeldung des von dem Steuermodul 2 jeweils angesprochenen Busteilnehmers T₁, T₂ erfolgt damit durch einen gepulsten Stromfluss in den Versorgungsleitungen 4, 5, die daher auch als unidirektionale Datenleitung mit entgegengesetzter Richtung zur eigentlichen Datenleitung 6 fungieren. Die Signalaufbereitung und Signalauswertung erfolgt über die bereits vorbeschriebene Stufen: Den Signalverstärker 13 mit seinem Frequenzfilter und dem nachgeschalteten Komparatorglied 14, dessen Ausgang den Eingang des Mikrokontrollers 10 beaufschlagt.

In gleicher Weise können unterschiedliche Schaltzustände oder die Parametrierung der Busteilnehmer T₁, T₂ steuermodulseitig abgefragt werden, welche Daten auf gleiche Weise an das Steuermodul 2 übermittelt werden. Auf diese Weise kann über das beschriebene Bussystem 1 auch die Parametrierung der einzelnen Busteilnehmer T₁, T₂ geändert werden, sollte sich infolge einer Zustandsabfrage herausstellen, dass eine Parametrierung nicht die gewünschte Einstellung aufweist.

Das beschriebene Bussystem 1 eignet sich insbesondere im Zusammenhang mit einem Lichtsteuersystem. Gleichwohl ist dieses Bussystem ebenfalls zum Einsatz bei anderen Anwendungen geeignet.

### Bezugszeichenliste

- 1: Bussystem
- 2: Steuermodul
- 3: Bus
- 4: Versorgungsleitung
- 5: Masseleitung
- 6: Datenleitung
- 7: Spannungsversorgung
- 8: LED
- 9: Schaltmittel
- 10: Mikroprozessor
- 11: Strommesseinrichtung
- 12: Shunt-Widerstand
- 13: Signalverstärker
- 14: Komparatorglied

- M: Mikrokontroller
- S: Speicher
- T₁, T₂: Busteilnehmer

## Patentansprüche

1. Verfahren zum Übermitteln von Daten innerhalb eines Bussystems (1), umfassend ein Steuermodul (2), einen Bus (3) und an den Bus (3) angeschlossene und von dem Steuermodul (2) ansteuerbare Busteilnehmer (T₁, T₂), von einem Busteilnehmer (T₁, T₂) an das Steuermodul (2), wobei die Busteilnehmer (T₁, T₂) von dem Steuermodul (2) zum Übermitteln von bestimmten Daten individuell angesteuert werden, **dadurch gekennzeichnet, dass** die von dem jeweiligen Busteilnehmer (T₁, T₂) zu übermittelnden Daten durch Modulation unterschiedlicher Zustände einer Last (8) des Busteilnehmers (T₁, T₂), die ein dem Busteilnehmer (T₁, T₂) zugeordneter Aktor ist, gesendet, die Zustandsänderung erfasst und auf den darin enthaltenen Datencode steuermodulseitig ausgewertet werden, wobei auf diese Weise gleichzeitig eine Kontrolle der Funktionstätigkeit der Aktoren des Bussystems (1) erfolgt.

2. Verfahren nach Anspruch 1, **dadurch gekennzeichnet, dass** die Last (8) des Busteilnehmers (T₁, T₂) zum Senden der gewünschten Daten einem vorgegebenen Code entsprechend zwischen wenigstens zwei Zuständen toggelt.

3. Verfahren nach Anspruch 2, **dadurch gekennzeichnet, dass** die Zustände der Last (8) des Busteilnehmers (T₁, T₂), zwischen denen diese zum Übermitteln der Daten toggelt, entweder zwischen "Volllast" und "Teillast" oder "keine Last" oder zwischen "Teillast" und "keine Last" sind.

4. Verfahren nach einem der Ansprüche 1 bis 3, **dadurch gekennzeichnet, dass** zum Erfassen der Zustände der Last (8) des Busteilnehmers (T₁, T₂) seine Aktionen beobachtet und ausgewertet werden.

5. Verfahren nach Anspruch 4, **dadurch gekennzeichnet, dass** die beobachteten Aktionen des Busteilnehmers (T₁, T₂) zur Ortsauflösung der physikalischen Anordnung der Busteilnehmer (T₁, T₂) ausgewertet werden.

6. Verfahren nach einem der Ansprüche 1 bis 5, **dadurch gekennzeichnet, dass** die Last (8) des Busteilnehmers (T₁, T₂) zum Übermitteln der Daten zwischen zwei durch die busgebundene Versorgungsspannung aktivierbaren Zuständen toggelt.

7. Verfahren nach Anspruch 6, **dadurch gekennzeichnet, dass** zum Erfassen der Zustände der Last (8) des Busteilnehmers (T₁, T₂) seine Stromaufnahme erfasst wird.

8. Verfahren nach Anspruch 7, **dadurch gekennzeichnet, dass** die Stromaufnahme steuermodulseitig erfasst und in einer nachgeschalteten Auswertestufe (13, 14, 10) ausgewertet wird.

9. Verfahren nach einem der Ansprüche 1 bis 8, **dadurch gekennzeichnet, dass** die Daten im Zweiphasenmarkierungscode (Bi-phase-Mark-Code) oder im Manchester-Code gesendet werden.

10. Bussystem, umfassend ein Steuermodul (2), einen von dem Steuermodul (2) ausgehenden Bus (3) mit einer Spannungsversorgungsleitung (4), mit einer Masseleitung (5) und mit einer Datenleitung (6) sowie an den Bus (3) angeschlossene Busteilnehmer (T₁, T₂), wobei dem Steuermodul (2) eine Strommesseinrichtung (11) zum Aufnehmen der sich über die Zeit ändernden Stromaufnahme eines zum Übermitteln von Daten von dem Steuermodul (2) angesteuerten Busteilnehmers (T₁, T₂) und eine von der Strommesseinrichtung (11) beaufschlagte Auswerteeinheit (10) zugeordnet sind, **dadurch gekennzeichnet, dass** die Busteilnehmer (T₁, T₂) zum Durchführen des Verfahrens nach einem der Ansprüche 1 bis 9 ausgebildet sind.

11. Bussystem nach Anspruch 9, **dadurch gekennzeichnet, dass** die Messeinrichtung (11) als Messglied einen Shunt-Widerstand (12), sowie einen Signalverstärker (13) zum Verstärken des Ausgangssignals des Shunt-Widerstandes (12) und ein dem Signalverstärker (13) nachgeschaltetes Komparatorglied (14) umfasst.

12. Bussystem nach Anspruch 11, **dadurch gekennzeichnet, dass** die Messeinrichtung als Messglied einen Hallsensor, sowie einen Signalverstärker zum Verstärken des Ausgangssignals des Hallsensors und ein dem Signalverstärker nachgeschaltetes Komparatorglied umfasst.

13. Bussystem nach Anspruch 11 oder 12, **dadurch gekennzeichnet, dass** dem Signalverstärker (13) ein Frequenzfilter zugeordnet ist

## Claims

1. Process for transferring data from a bus user (T₁, T₂) to the control module (2) within a bus system (1) which comprises a control module (2), a bus (3), and bus users (T₁, T₂) that are connected to the bus (3) and can be controlled by the control module (2), the bus users (T₁, T₂) being individually triggered by the control module (2) for the purpose of transferring specific data, **characterised in that** the data to be transferred from the respective bus user (T₁, T₂) is transmitted by modulating various states of a load (8) of the bus user (T₁, T₂), which is an actuator allocated to the bus user (T₁, T₂), that the change of state is recorded and analysed on the part of the control module as regards the data code incorporated therein, with a control of the functioning of the actuators of the bus system (1) thus taking place at the same time.

2. Process according to Claim 1, **characterised in that** the load (8) of the bus user (T₁, T₂) toggles between at least two states in accordance with a prescribed code for the purpose of transmitting the desired data.

3. Process according to Claim 2, **characterised in that** the states of the load (8) of the bus user (T₁, T₂) between which it toggles for the purpose of transmitting the data are either between "full load" and "part load" or "no load", or between "part load" and "no load".

4. Process according to any of Claims 1 to 3, **characterised in that** for the purpose of recording the states of the load (8) of the bus user (T₁, T₂), the activities of the same are monitored and analysed.

5. Process according to Claim 4, **characterised in that** the monitored activities of the bus user (T₁, T₂) are analysed to achieve the local resolution of the physical arrangement of the bus users (T₁, T₂).

6. Process according to any of Claims 1 to 5, **characterised in that** the load (8) of the bus user (T₁, T₂) toggles between two states that can be activated by the bus-connected supply voltage for the purpose of transferring the data.

7. Process according to Claim 6, **characterised in that** in order to record the states of the load (8) of the bus user (T₁, T₂), the power consumption of the same is recorded.

8. Process according to Claim 7, **characterised in that** the power consumption is recorded on the control module side and is analysed in a series-connected analysis stage (13, 14, 10).

9. Process according to any of Claims 1 to 8, **characterised in that** the data is transmitted in bi-phase mark coding or in Manchester coding.

10. Bus system comprising a control module (2), a bus (3) leading from the control module (2) having a voltage supply line (4), having a grounding cable (5), and having a data line (6) and a bus user (T₁, T₂) connected to the bus (3), there being a current measuring system (11) allocated to the control module (2) for recording the power consumption, which changes over time, of a bus user (T₁, T₂) for transmitting data that is controlled by the control module (2), as well as an analysis unit (10) on which the current measuring system (11) impinges, **characterised in that** the bus users (T₁, T₂) are designed to implement the process according to any of Claims 1 to 9.

11. Bus system according to Claim 9, **characterised in that** the measuring system (11) comprises a shunt resistance (12) as its measuring element and also a signal amplifier (13) for amplifying the output signal of the shunt resistance (12), and a comparator element (14) which is series-connected to the signal amplifier (13).

12. Bus system according to Claim 11, **characterised in that** the measuring system (11) comprises a Hall-effect sensor as its measuring element and also a signal amplifier for amplifying the output signal of the Hall-effect sensor and a comparator element which is series-connected to the signal amplifier.

13. Bus system according to Claim 11 or Claim 12, **characterised in that** a frequency filter is allocated to the signal amplifier (13).

## Revendications

1. Procédé pour la transmission de données au sein d'un système de bus (1) comprenant un module de commande (2), un bus (3), et des participants au bus (T₁, T₂), raccordés au bus (3) et pouvant être commandés par le module de commande (2), transmission ayant lieu d'un participant au bus (T₁, T₂) au module de commande (2), les participants au bus (T₁, T₂) étant interpellés individuellement par le module de commande (2) pour la transmission de certaines données, **caractérisé en ce que** les données devant être transmises par le participant respectif au bus (T₁, T₂) sont transmises par modulation d'états divers d'une charge (8) du participant au bus (T₁, T₂), charge étant un activateur attribué au participant au bus (T₁, T₂), que le changement d'état est saisi et qu'il y a évaluation par le module de commande permettant la détermination du code de données contenu, un contrôle du fonctionnement des activateurs du système de bus (1) ayant lieu ainsi en même temps.

2. Procédé selon la revendication 1, **caractérisé en ce que** la charge (8) du participant au bus (T₁, T₂) alterne, pour la transmission des données souhaitées, entre au moins deux états, selon un code donné.

3. Procédé selon la revendication 2, **caractérisé en ce que** les états de la charge (8) du participant au bus (T₁, T₂) entre lesquels celle-ci alterne pour la transmission des données sont soit « pleine charge » et « charge partielle » ou « pas de charge », soit « charge partielle » et « pas de charge ».

4. Procédé selon l'une des revendications 1 à 3, **caractérisé en ce que**, pour la saisie des états de la charge (8) du participant au bus (T₁, T₂), ses actions sont observées et évaluées.

5. Procédé selon la revendication 4, **caractérisé en ce que** les actions observées du participant au bus (T₁, T₂) sont évaluées pour la résolution locale du groupement physique des participants au bus (T₁, T₂).

6. Procédé selon l'une des revendications 1 à 5, **caractérisé en ce que** la charge (8) du participant au bus (T₁, T₂) alterne pour la transmission des données entre deux états pouvant être activés par la tension d'alimentation liée au bus.

7. Procédé selon la revendication 6, **caractérisé en ce que**, pour la saisie des états de la charge (8) du participant au bus (T₁, T₂), sa puissance absorbée est saisie.

8. Procédé selon la revendication 7, **caractérisé en ce que** la puissance absorbée est saisie par le module de commande et évaluée à un niveau d'évaluation en aval (13, 14, 10).

9. Procédé selon l'une des revendications 1 à 8, **caractérisé en ce que** les données sont transmises en code biphase mark (Biphase Mark Code) ou en code Manchester.

10. Système de bus, comprenant un module de commande (2), un bus (3) partant du module de commande (2) comportant une ligne d'alimentation en tension (4), un câble de masse (5) et une ligne données (6), ainsi que des participants au bus (T₁, T₂) raccordés au bus (3), un dispositif de mesure du courant (11) permettant l'enregistrement de la puissance absorbée, changeant avec le temps, d'un participant au bus (T₁, T₂) interpellé par le module de commande (2) pour la transmission des données, et une unité d'évaluation (10) alimentée par le dispositif de mesure du courant (11) étant attribués au module de commande (2), **caractérisé en ce que** les participants au bus (T₁, T₂) sont conçus pour réaliser le procédé selon l'une des revendications 1 à 9.

11. Système de bus selon la revendication 9, **caractérisé en ce que** le dispositif de mesure (11) comprend, en tant qu'élément de mesure, une résistance shunt (12), ainsi qu'un amplificateur de signaux (13) pour l'amplification du signal de sortie de la résistance shunt (12), et un élément comparateur (14) situé en aval de l'amplificateur de signaux (13).

12. Système de bus selon la revendication 11, **caractérisé en ce que** le dispositif de mesure comprend, en tant qu'élément de mesure, un capteur hall, ainsi qu'un amplificateur de signaux pour l'amplification du signal de sortie du capteur hall, et un élément comparateur situé en aval de l'amplificateur de signaux.

13. Système de bus selon la revendication 11 ou 12, **caractérisé en ce que** un filtre de fréquences est attribué à l'amplificateur de signaux (13).
